(19) Europäisches Patentamt
European Patent Office
Office européen des brevets

(11) **EP 3 187 719 B1**

(12) **EUROPEAN PATENT SPECIFICATION**

(45) Date of publication and mention
of the grant of the patent:
**07.12.2022 Bulletin 2022/49**

(21) Application number: **15835339.1**

(22) Date of filing: **05.08.2015**

(51) International Patent Classification (IPC):
*F02D 41/10* (2006.01)   *F02D 11/10* (2006.01)
*F02D 21/08* (2006.01)   *F02D 23/00* (2006.01)
*F02D 43/00* (2006.01)   *F02P 5/15* (2006.01)
*B60W 10/06* (2006.01)   *B60W 10/08* (2006.01)
*F02D 41/00* (2006.01)   *F02M 26/06* (2016.01)

(52) Cooperative Patent Classification (CPC):
**B60W 10/06; B60W 10/08; F02D 11/10;**
**F02D 21/08; F02D 23/00; F02D 41/005;**
**F02D 41/10; F02D 43/00; F02M 26/06; F02P 5/15;**
F02D 41/0007; F02D 41/0077; F02D 2041/001;
F02D 2041/0017; F02M 26/22;    (Cont.)

(86) International application number:
**PCT/JP2015/072155**

(87) International publication number:
**WO 2016/031507 (03.03.2016 Gazette 2016/09)**

(54) **DEVICE FOR INTERNAL COMBUSTION ENGINE**

VORRICHTUNG FÜR EINEN VERBRENNUNGSMOTOR

DISPOSITIF POUR MOTEUR À COMBUSTION INTERNE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **29.08.2014 JP 2014174721**

(43) Date of publication of application:
**05.07.2017 Bulletin 2017/27**

(73) Proprietor: **Hitachi Astemo, Ltd.**
**Hitachinaka-shi, Ibaraki 312-8503 (JP)**

(72) Inventors:
• **KUMANO, Kengo**
**Tokyo 100-8280 (JP)**
• **AKAGI, Yoshihiko**
**Hitachinaka-shi, Ibaraki 312-8503 (JP)**

(74) Representative: **MERH-IP Matias Erny Reichl**
**Hoffmann**
**Patentanwälte PartG mbB**
**Paul-Heyse-Strasse 29**
**80336 München (DE)**

(56) References cited:
| | |
|---|---|
| EP-A2- 2 444 641 | EP-A2- 2 444 641 |
| EP-A2- 2 532 867 | EP-A2- 2 532 867 |
| JP-A- 2000 002 122 | JP-A- 2000 002 122 |
| JP-A- 2010 120 472 | JP-A- 2010 120 472 |
| JP-A- 2011 047 357 | JP-A- 2011 047 357 |
| JP-A- 2012 097 639 | JP-A- 2012 097 639 |
| JP-A- 2013 011 271 | JP-A- 2013 011 271 |
| JP-A- 2013 231 371 | JP-A- 2013 231 371 |
| JP-A- 2014 015 922 | JP-A- 2014 015 922 |
| JP-A- 2014 152 716 | JP-A- 2014 152 716 |
| US-A1- 2003 209 234 | US-A1- 2003 209 234 |
| US-A1- 2014 182 287 | US-A1- 2014 182 287 |

(52) Cooperative Patent Classification (CPC): (Cont.)
Y02T 10/40

## Description

Technical Field

The present invention relates to a control device for controlling a turbocharged engine including a low-pressure EGR flow passage.

Background Art

In recent years, attempts have been made to improve the efficiency of the engine to reduce the fuel consumption of automobiles. One of the techniques to achieve such improvement is to increase the compression ratio. By increasing the compression ratio, the theoretical thermal efficiency of the internal combustion engine is improved. On the other hand, another development advanced for reducing the fuel composition is to reduce the size of the engine. By reducing the size of the engine, the pumping loss and the mechanical loss can be suppressed. However, in order to maintain the torque (output) of the engine with the reduced size, it is necessary to increase the turbocharging pressure.

To avoid the abnormal combustion, the highly turbocharged engine system has come to employ the EGR system in which some of the exhaust gas is returned to the intake gas. In particular, attention has been paid to the low-pressure EGR system which enables the EGR in large amount even in the turbocharged region. The low-pressure EGR system is to reflux the exhaust gas on the downstream side of the turbine of a turbocharger to the upstream side of the compressor of the turbocharger. In the low-pressure EGR system, usually, the path from the junction between the exhaust gas and the fresh air to the cylinder is long and the junction exists in the upstream part of the throttle valve, for example. These factors cause the phenomenon that the amount of exhaust gas is increased or decreased temporarily at the transition time like when the driving is conducted at the decreased speed or the increased speed and as a result, the EGR rate cannot be stably maintained at the target value. Because of the transitional incompatibility of the EGR rate, the following problems occur: the exhaust gas deteriorates due to the variation in air-fuel ratio, the noise is generated due to the knocking, the torque varies, and in the worst case, an accidental fire is caused.

PTL 1 has disclosed the technique for suppressing the temporary decrease in EGR rate at the acceleration. In this technique, the current exhaust gas pressure is estimated from the intake air amount and the opening of the EGR valve is corrected based on the estimated exhaust gas pressure.

Citation List

Patent Literature

PTL 1: JP 2012-251509 A
PTL 2: JP 2014-152716 A
PTL 3: JP 2011-047357 A
PTL 4: US 2003/209234 A1

Summary of Invention

Technical Problem

The EGR rate decreases temporarily at the time of acceleration because when the throttle opening is increased and the intake gas on the upstream side of the throttle ($\approx$ atmospheric pressure) suddenly flows to the downstream side of the throttle (negative pressure), the increase in amount of exhaust gas (amount of EGR) to be refluxed relative to the increase in amount of fresh air is delayed. In the technique according to PTL 1, the opening of the EGR valve is increased temporarily right after the acceleration so that the amount of EGR is increased to maintain the EGR rate properly. However, increasing the amount of EGR in accordance with the sudden increase in amount of fresh air requires an extremely high-responsive EGR valve.

Furthermore, PTL 2 discloses an ECU, wherein EGR rate at the end of the EGR passage is estimated. Consequently, a throttle target opening degree toward a closing side is corrected, when the EGR rate is higher than a predetermined value in the period up until the EGR gas reaches the combustion chamber.

PTL 3 discloses a control device for an internal combustion engine which is applied to a combustion control system of an internal combustion engine having means for supplying part of the exhaust gas discharged from the combustion chamber of the internal combustion engine to the exhaust passage to the combustion chamber.

PTL 4 discloses the use of the intake valve closing timing to adjust the air-fuel ratio and EGR ratio of an engine.

The present invention has been made in view of the above problem, and an object is to provide a control device for an engine, which avoids the temporary decrease in EGR rate without depending on the responsiveness of the EGR valve and suppresses the knocking or the deterioration in exhaust gas at the acceleration. Document EP2532867 A2 discloses a control device aiming at maintaining a constant EGR rate during transient periods.

Solution to Problem

In order to solve the above issue, according to the present invention a control device for an internal combustion engine according the independent claims include: a turbocharger; a low-pressure EGR flow passage that connects between an exhaust pipe on a downstream side of a turbine of the turbocharger and an intake pipe on an upstream side of a compressor of the turbocharger;

an intake amount adjusting valve that controls an amount of gas flowing in a cylinder; and an EGR valve that controls a flow rate of an exhaust gas in the low-pressure EGR flow passage, wherein when an acceleration request is made, an intake amount control for acceleration is executed in which an amount of controlling an opening of the intake amount adjusting valve relative to an accelerator operation is reduced as an EGR rate increases, wherein, in a case of executing the intake amount control for acceleration, an opening of the EGR valve is increased temporarily between a time when the intake amount adjusting valve starts an operation and a time when the intake amount adjusting valve ends the operation.

Advantageous Effects of Invention

According to the invention, the speed of the intake gas flowing from the upstream side to the downstream side of the throttle valve at the acceleration is suppressed and the sudden increase of fresh air is suppressed by the throttle valve control. This can avoid the temporary decrease in EGR rate at the acceleration and suppress the deterioration in exhaust gas and the knocking.

Brief Description of Drawings

[FIG. 1] FIG. 1 is a system structure diagram of a control device for an engine according to a first embodiment of the present invention.
[FIG. 2] FIG. 2 is diagram illustrating an EGR control region of an operation control device for the engine according to the first embodiment of the present invention.
[FIG. 3] FIG. 3 is a diagram showing how the EGR rate changes in the turbocharged engine including the conventional low-pressure EGR when the speed is increased.
[FIG. 4] FIG. 4 is a system block diagram illustrating the structure of the control device for the engine according to the first embodiment of the present invention.
[FIG. 5] FIG. 5 is diagram illustrating the outline of an acceleration control logic carried out in an ECU 20 of the control device for the engine according to the first embodiment of the present invention.
[FIGS. 6(a) and 6 (b)] FIGS. 6 (a) and 6 (b) illustrate the method of controlling the throttle and the EGR valve relative to the accelerator opening of an acceleration control unit according to the first embodiment of the present invention.
[FIG. 7] FIG. 7 is a flowchart illustrating the acceleration control content in the control device for the engine according to the first embodiment of the present invention.

[FIG. 8] FIG. 8 is a time chart of the acceleration control by the control device for the engine according to the first embodiment of the present invention,
[FIG. 9] FIG. 9 is a system structure diagram of a control device for an engine according to an example useful to understand the present invention.
[FIG. 10] FIG. 10 is a system block diagram illustrating the structure of the control device for the engine according to the example useful to understand the present invention.
[FIG. 11] FIG. 11 is a diagram illustrating the outline of the acceleration control logic carried out in the ECU 20 of the control device for the engine according to the example useful to understand the present invention.
[FIG. 12] FIG. 12 is a flowchart illustrating the acceleration control content in the control device for the engine according to the example useful to understand the present invention.
[FIG. 13] FIG. 13 is a time chart of the acceleration control by the control device for the engine according to the example useful to understand the present invention. Description of Embodiments

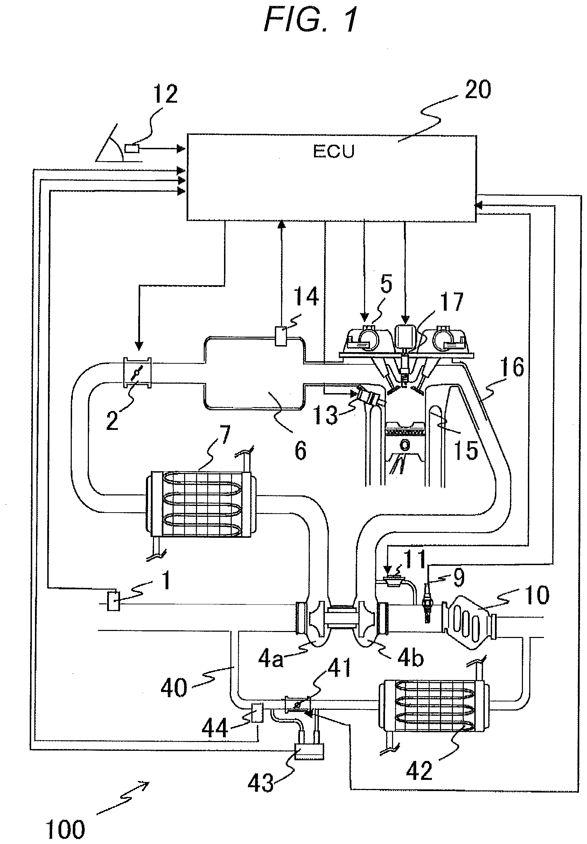

A structure and an operation of a control device for an engine according to a first embodiment of the present invention are hereinafter described with reference to FIGS. 1 to 8.
FIG. 1 is a system structure diagram illustrating a structure of a system in which the control device for an engine according to the first embodiment of the present invention is used for a direct-injection gasoline engine for automobiles including a low-pressure EGR flow passage.
An engine 100 is a four-cylinder gasoline engine for automobiles carrying out the spark ignition combustion. An intake pipe of the engine 100 includes at the appropriate positions, an air flow sensor 1 that measures the amount of intake air, a compressor 4a of a turbocharger that turbocharges the intake gas, an intercooler 7 that cools the intake gas, an electronic control throttle 2 that adjusts the intake pipe pressure, and an intake pressure sensor 14 that measures the pressure in an intake manifold 6. The engine 100 is further provided with a fuel injection device (hereinafter injector) 13 that injects the fuel into a cylinder 15 of each cylinder, and an ignition plug 17 that supplies the ignition energy for each cylinder. In addition, a cylinder head of the engine 100 is provided with a variable valve 5 that adjusts the gas flowing into the cylinder or emitted from the cylinder. By adjusting the variable valve 5, the amount of intake gas and the amount of internal EGR are adjusted in all the No. 1 to No. 4 cylinders. Although not shown, the fuel injection device 13 is connected through a fuel pipe to a high-pressure fuel pump that supplies the high-pressure fuel to the fuel injection device 13, and the fuel pipe is internally provided with a fuel pressure sensor that measures the fuel injection pressure.

Moreover, the exhaust pipe 16 includes at the appropriate positions, a turbine 4b that applies the rotatory power to the compressor 4a of the turbocharger with the exhaust gas energy, an electronic control waste gate valve 11 that adjusts the flow rate of exhaust gas flowing in the turbine, a three-way catalyst 10 that cleans the exhaust gas, and an air-fuel ratio sensor 9 corresponding to one embodiment of an air-fuel ratio detector for detecting the air-fuel ratio of the exhaust gas on the upstream side of the three-way catalyst 10. Although not shown, a crank shaft is provided with a crank angular sensor that calculates the rotation angle.

In addition, an EGR pipe 40 that refluxes the exhaust gas from the downstream side of the catalyst 10 in the exhaust pipe to the upstream side of the compressor 4a in the intake pipe is provided. The EGR pipe 40 includes at the appropriate positions, an EGR cooler 42 that cools the EGR, an EGR valve 41 that controls the EGR flow rate, a differential pressure sensor 43 that detects the difference in pressure between the upstream side and the downstream side of the EGR valve, and an EGR temperature sensor 44 that detects the EGR temperature.

Signals from the air flow sensor 1, the air-fuel ratio sensor 9, the intake pressure sensor 14, the differential pressure sensor 43, and the EGR temperature sensor 44 are sent to an engine control unit (ECU) 20. Signals from the accelerator opening sensor 12 are also sent to the ECU 20. The accelerator opening sensor 12 detects the amount of pushing down the accelerator pedal, i.e., the accelerator opening. The ECU 20 calculates the required torque on the basis of the output signals of the accelerator opening sensor 12. That is to say, the accelerator opening sensor 12 is used as a required torque detection sensor that detects the torque required for the engine. The ECU 20 calculates the engine speed on the basis of the output signal from the crank angular sensor. Based on the operation state of the engine obtained from the outputs of various sensors described above, the ECU 20 optimally calculates the main operation amount of the engine, such as the air flow rate, the fuel injection amount, the ignition time, and the fuel pressure.

The fuel injection amount calculated by the ECU 20 is converted into a valve opening pulse signal and the signal is sent to the injector 13. An ignition signal is sent to the ignition plug 17 so that the ignition occurs at the ignition time calculated by the ECU 20. The throttle opening calculated by the ECU 20 is sent to the electronic control throttle 2 as a throttle driving signal. The operation amount of the variable valve calculated by the ECU 20 is sent to the variable valve 5 as a variable valve driving signal. The waste gate valve opening calculated by the ECU 20 is sent to the waste gate valve 11 as a waste gate valve driving signal. The EGR valve opening calculated by the ECU 20 is sent to the EGR valve 41 as an EGR valve opening driving signal.

The fuel is injected to the air flowing into the cylinder 15 through the intake valve from the intake pipe and thus the mixed gas is formed. The mixed gas explodes by the spark generated from the ignition plug 17 at the predetermined ignition time, and with the combustion pressure, the piston is pressed down to produce the driving power for the engine. In addition, the exhaust gas after the explosion is sent to the three-way catalyst 10 through the exhaust pipe 16, and the exhaust component is cleaned in the three-way catalyst 10 and then discharged to the outside.

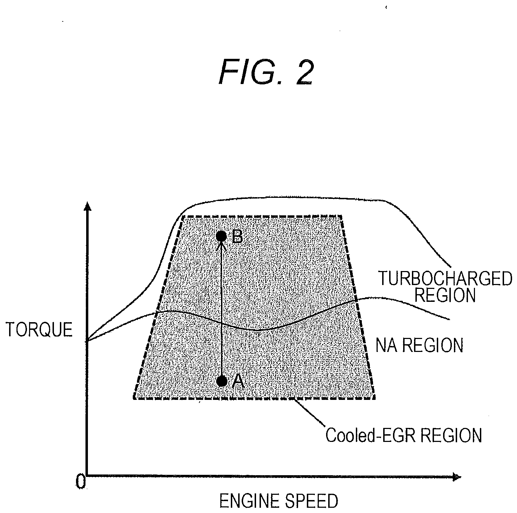

FIG. 2 is a diagram illustrating an EGR control region of the operation control device for the engine according to the first embodiment of the present invention. A region framed by a thick dashed line corresponds to a so-called EGR region where the exhaust gas is refluxed. In this example, the region excluding the low-load region and the high-rotation region corresponds to the EGR region. In this region, the knocking and the increase in exhaust gas temperature have conventionally been suppressed by enriching the fuel. Meanwhile, the fuel-saving operation can be achieved by combusting at the theoretical air-fuel ratio while the cooled-EGR is introduced in the same region to suppress the knocking and the exhaust gas temperature.

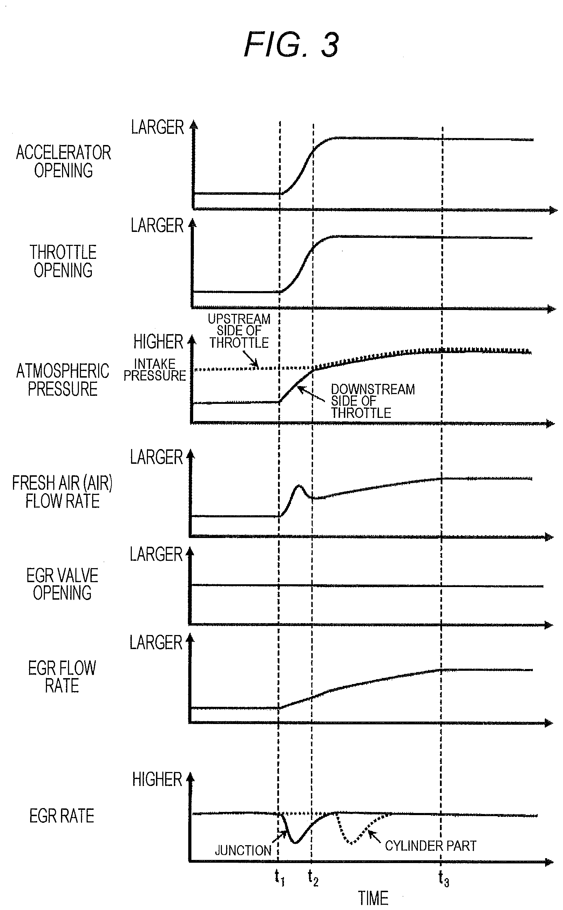

FIG. 3 is a diagram for describing how the accelerator opening, the throttle opening, the EGR valve opening, the intake pressure, the intake flow rate, the EGR flow rate, and the EGR rate change over time when the speed is increased from a driving operation point A to a driving operation point B illustrated in FIG. 2 in the turbocharged engine including the conventional low-pressure EGR. As illustrated in FIG. 3, when the throttle valve is opened in accordance with the accelerator opening as the driver pushes in the accelerator, the compression work of the intake air with the turbocharger is narrowed by the throttle valve 7, so that the difference in pressure between the upstream side and the downstream side of the throttle valve 7 is increased. Opening the throttle valve suddenly in this state while the target EGR rate is fixed causes the fresh air to flow into the downstream side of the throttle valve at once. This reduces the difference in pressure between the upstream side and the downstream side of the throttle valve 7; thus, the flow rate of the intake gas passing the throttle varies (increases). On this occasion, the flow rate of the fresh air (air) is suddenly increased as the flow rate of the intake gas is increased; on the other hand, in regard to the amount of EGR, the flow rate is determined based on the pressure of the exhaust gas on the downstream side of the turbine. Therefore, the increase in EGR amount is gentle relative to the sudden increase in flow rate of fresh air. In this manner, the spike phenomenon occurs that the EGR rate remarkably decreases temporarily in the EGR junction. When the spike with such an EGR rate has reached the cylinder, problems may occur that the accuracy of controlling the air-fuel ratio deteriorates, the accuracy of controlling the torque deteriorates, and the driving property deteriorates due to knocking.

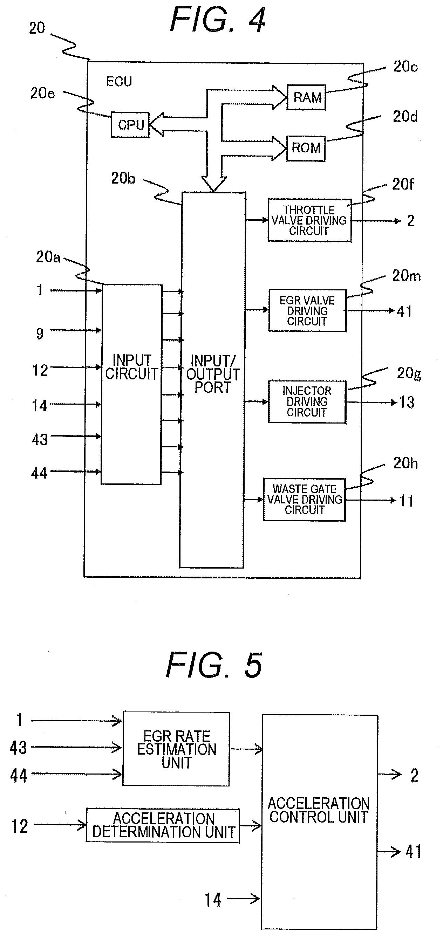

FIG. 4 is a system block diagram illustrating the structure of the control device for the engine according to the first embodiment of the present invention. The output signals from the air flow sensor 1, the air-fuel ratio sensor 9, the accelerator opening sensor 12, the intake pressure sensor 14, the differential pressure sensor 43, and the EGR temperature sensor 44 are input to an input circuit 20a of the ECU 20. However, the input signals are not limited thereto. The input signals of the sensors are sent to an input port of an input/output port 20b. The values sent to the input port 20b are saved in a RAM 20c and calculated by a CPU 20e. A control program describing the calculation process content is written in a ROM 20d in advance.

The values representing the operation amount of each actuator calculated in accordance with the control program are saved in the RAM 20c, sent to an output port of the input/output port 20b, and then sent to each actuator through each driving circuit. In the case of the present embodiment, the driving circuits include an electronic throttle driving circuit 20f, an injector driving circuit 20g, a waste gate valve driving circuit 20h, and an EGR valve driving circuit 20m. These circuits control the electronic control throttle 2, the injector 13, the waste gate valve 11, and the EGR valve 41, respectively. In this embodiment, the device includes the driving circuits within the ECU 20 but the present invention is not limited thereto, and any of the driving circuits may be included in the ECU 20.

The ECU 20 estimates the EGR rate on the basis of the input signals and controls the throttle valve 2 and the EGR valve 41 when the acceleration is requested in the state of a large amount of EGR.

FIG. 5 is a diagram illustrating the outline of the acceleration control logic carried out in the ECU 20 of the control device for the engine according to the first embodiment of the present invention. An EGR rate estimation unit, an acceleration determination unit, and an acceleration control unit are provided. A signal of the air flow sensor 1, a signal of the differential pressure sensor 43, and a signal of the EGR temperature sensor 44 are input to the EGR rate estimation unit, and the EGR rate is calculated. The signal of the accelerator opening sensor 12 is input to the acceleration determination unit in which whether the acceleration is currently carried out or not is determined. The EGR rate calculated by the EGR rate estimation unit, an acceleration determination flag output from the acceleration determination unit, and the signal of the intake pressure sensor 14 are input to the acceleration control unit and if the acceleration control is necessary, the control for the acceleration is executed for the throttle and the EGR valve.

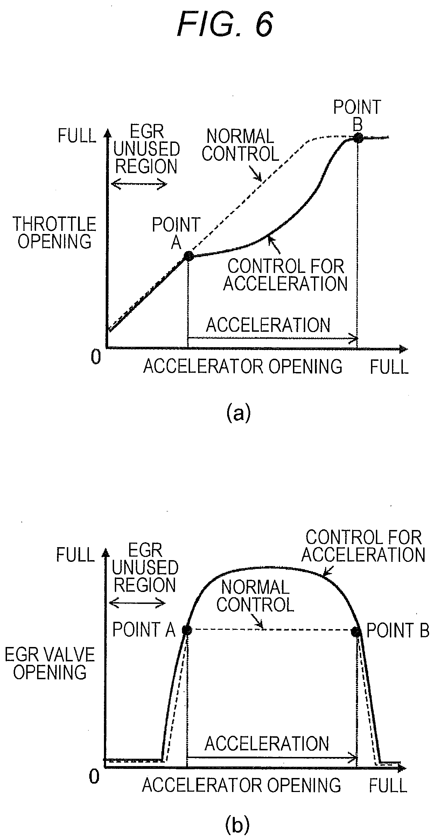

FIGS. 6(a) and 6(b) are diagrams illustrating the method of controlling the throttle and the EGR valve relative to the accelerator opening of the acceleration control unit according to the first embodiment of the present invention. FIG. 6(a) illustrates the method of controlling the throttle relative to the accelerator opening. Usually, the accelerator opening based on the driver's operation and the target value of the throttle opening that controls the intake amount of the engine are in the substantially linear relation and stored in the ECU. On the other hand, if the EGR is introduced and it has been determined that the acceleration degree is large, the control for the acceleration is applied. In the control for the acceleration, the throttle is controlled so that the throttle opening becomes smaller than that in the normal throttle control with respect to the same accelerator opening. In the control for the acceleration, the time at which the throttle opening is increased after the acceleration is requested may be delayed as compared to the normal throttle control instead of varying the throttle opening with respect to the same accelerator opening. FIG. 6(b) illustrates the method of controlling the EGR valve with respect to the accelerator opening. In this example, the target value of the EGR valve opening in the EGR region is usually made substantially constant and stored in the ECU. On the other hand, if the EGR is introduced and it has been determined that the acceleration degree is large, the control for the acceleration is applied. In the control for the acceleration, the throttle is controlled so that the EGR valve opening becomes larger than the normal EGR valve opening with respect to the same accelerator opening.

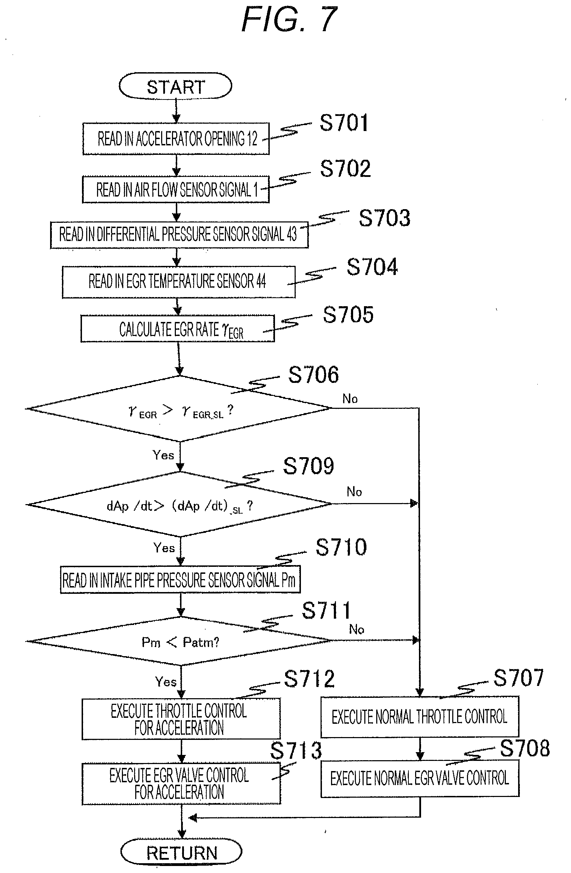

FIG. 7 is a flowchart illustrating the acceleration control content in the control device for the engine according to the first embodiment of the present invention. The control content illustrated in FIG. 7 is repeatedly executed in every predetermined period by the ECU 20.

The ECU 20 reads in an accelerator opening signal 12 in Step S701, a signal of the air flow sensor 1 in Step S702, a signal of the differential pressure sensor 43 in Step S703, and then a signal of the EGR temperature sensor 44 in Step S704. Next, in Step S705, based on the signal of the air flow sensor 1, the signal of the differential pressure sensor 43, and the signal of the EGR temperature sensor 44 which have been read in, the EGR rate $\gamma_{EGR}$ in the intake gas is calculated according to the following formulae.

The EGR rate $\gamma_{EGR}$ is obtained by the following formulae (1) and (2):

$$\gamma_{EGR} = \frac{m_{EGR}}{m_{air} + m_{EGR}} \qquad (1),$$

$$m_{EGR} = \frac{P_a \times A \times C \sqrt{\dfrac{2 \times \Delta P_{EGR}}{\rho}}}{R_{EGR} T_{EGR}} \qquad (2)$$

$m_{air}$: air mass flow rate [g/s]
$m_{EGR}$: EGR mass flow rate [g/s]
$R_{EGR}$: gas constant of EGR [Pa·m³/g·K]
$T_{EGR}$: EGR temperature [K]

$\Delta P_{EGR}$: difference in pressure between the upstream side and the downstream side of EGR valve [Pa]
C: pressure loss coefficient of EGR valve
p: EGR density [g/m³]

Next, in Step S706, the magnitude relation between the calculated EGR rate $\gamma_{EGR}$ and the EGR rate threshold value $\gamma_{EGR\_SL}$ that has been determined in advance is compared and whether the transitional EGR decrease (spike) can occur or not is determined.
If $\gamma_{EGR} > \gamma_{EGR\_SL}$ is satisfied, it is determined that the transitional EGR decrease (spike) can occur and the process advances to Step S709.
If $\gamma_{EGR} < \gamma_{EGR\_SL}$ is satisfied, it is determined that the transitional EGR decrease (spike) cannot occur and the process advances to Step S707 and the normal throttle control is performed, and then the process advances to S708 where the normal EGR valve control is carried out and a series of controls is terminated.

$$\frac{A_P}{dt} > \left(\frac{A_P}{dt}\right)_{SL}$$

In Step S709, the degree of the acceleration request from the driver (here, the time change quantity Ap/dt of the accelerator opening Ap is used) is calculated and by comparing the magnitude relation with a predetermined threshold value $(Ap/dt)_{SL}$, whether the transitional EGR decrease (spike) can occur or not is determined.
If this formula is satisfied, it is determined that the transitional EGR decrease (spike) can occur and the process advances to Step S710.

$$\frac{A_P}{dt} < \left(\frac{A_P}{dt}\right)_{SL}$$

If this formula is satisfied, it is determined that the transitional EGR decrease (spike) cannot occur and the process advances to Step S707 and the normal throttle control is performed, and then the process advances to S708 in which the normal EGR valve control is carried out and a series of controls is terminated.
In Step S710, the intake pipe pressure sensor signal 14 is read in. Next, the process advances to Step S711 in which whether the transitional EGR decrease (spike) can occur or not is determined by comparing the magnitude relation between the read intake pressure $P_m$ and the atmospheric pressure $P_{atm}$.
If $P_m < P_{atm}$ is satisfied, it is determined that the transitional EGR decrease (spike) can occur and the process advances to Step S712.

If $P_m > P_{atm}$ is satisfied, it is determined that the transitional EGR decrease (spike) cannot occur and the process advances to Step S707 and the normal throttle control is performed, and then the process advances to S708 in which the normal EGR valve control is carried out and a series of controls is terminated.
If the process has advanced to Step S712, it is determined that the current acceleration condition is the condition where the transitional EGR decrease (spike) occurs. Therefore, the throttle control for the acceleration is executed and then the EGR control for the acceleration is carried out in Step S713 and a series of controls is terminated.

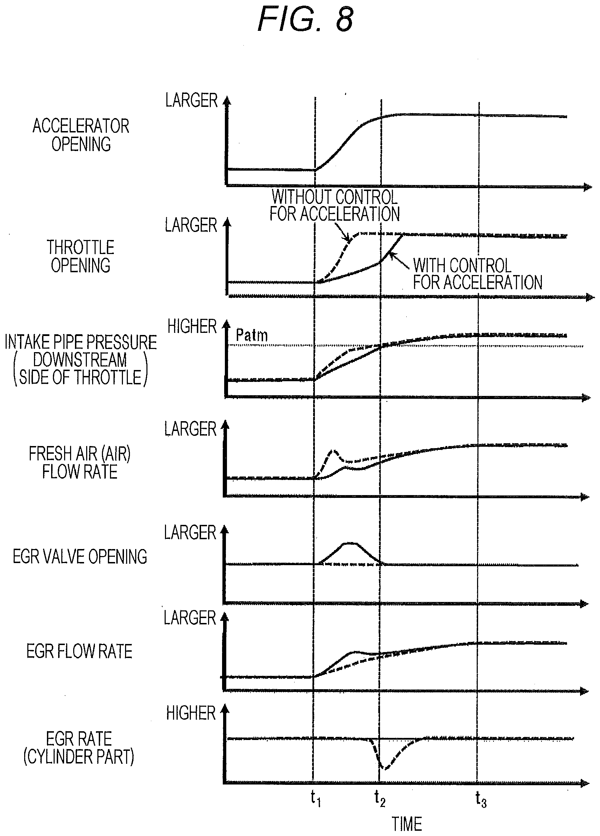

FIG. 8 is a time chart of the acceleration control by the control device for the engine according to the first embodiment of the present invention. The drawing shows in the order from above, the change over time of the accelerator opening, the throttle opening, the intake pipe pressure in the downstream part of the throttle, the flow rate of fresh air (air), the EGR valve opening, the EGR flow rate, and the EGR rate of the cylinder part. For the reference, the dotted lines indicate the results of not executing the control for the acceleration. In this example, it is assumed that the driving is conducted at the EGR rate that is more than or equal to a predetermined value from the beginning. At a time $t_1$, the driver pushes in the accelerator to start the acceleration. In this example, since the driver highly requires for the acceleration, the control for the acceleration is executed. As the accelerator opening is increased, the throttle opening and the EGR valve opening are increased. Here, since the increase in throttle opening is gentler than that without the control for the acceleration, the sharp increase in amount of intake gas flowing in the throttle is suppressed and the sharp increase in flow rate of fresh air (air) is suppressed. Moreover, the increase in EGR valve opening increases the EGR flow rate as compared to that without the control for the acceleration. If the accelerator opening is increased further, the EGR valve opening is decreased in accordance with the relation of FIG. 6(b) and then the opening returns to the initial one. In the period from the time $t_1$ to a time $t_2$, the EGR valve opening is increased temporarily and the maximum value is within the period from the time $t_1$ to the time $t_2$. At the time $t_2$, the pressure $P_m$ of the intake pipe reaches the atmospheric pressure $P_{atm}$. The control for the acceleration then shifts to the normal control and the throttle opening is increased to the level without the control for the acceleration. At a time $t_3$, the acceleration ends and the state shifts to the normal driving state. By the aforementioned controls of the throttle valve and the EGR valve, the flow rate of the fresh air and the EGR flow rate can be controlled as appropriate even in the acceleration state from the time $t_1$ to the time $t_3$; thus, the EGR rate can be maintained constant.
In the engine including the low-pressure EGR flow passage and the turbocharger, by selecting the control method for the throttle valve and the EGR valve on the basis of the current EGR rate, the intake pipe pressure, and the driver's requested acceleration degree in view of the acceleration control method described in this example, the EGR rate at the acceleration can be maintained properly and the deterioration in exhaust gas and driving property can be suppressed.

In the control described in this example, whether the condition is that the transitional EGR decrease (spike) can occur or not is determined by comparing the change amount of the EGR rate and the accelerator opening over time and their predetermined thresholds, and based on the comparison result, whether the throttle valve is used under the control for the acceleration is decided. However, the present invention is not limited thereto. For example, as the EGR rate is larger and the driver requests for the acceleration more, the change may be made continuously so that the degree of suppressing the increase in throttle opening is increased. Moreover, the degree of increasing the throttle opening may be selected gradually based on the result of comparing with a plurality of thresholds.

For a predetermined period after the driver starts to request for the acceleration, the control may be executed so that the ignition time is lagged as compared to that in the case in which the control for the acceleration of the throttle valve is not executed.

Instead of the control for the acceleration of the throttle valve, the intake valve provided for each cylinder 15 and the waste gate valve 11 may be controlled to maintain the EGR rate at the acceleration properly. Note that in the case of control for the acceleration by the waste gate valve 11, the control is possible only in the driving region where the turbocharging is carried out.

In the case of the automobile further including a vehicle driving motor as the motive power source for the vehicle driving, which is a so-called hybrid automobile, when the control for the acceleration of the throttle valve is executed, the output of the vehicle driving motor may be increased for a predetermined period after the driver starts to request for the acceleration. This can suppress the deterioration in accelerating performance while the throttle valve is used under the control for the acceleration.

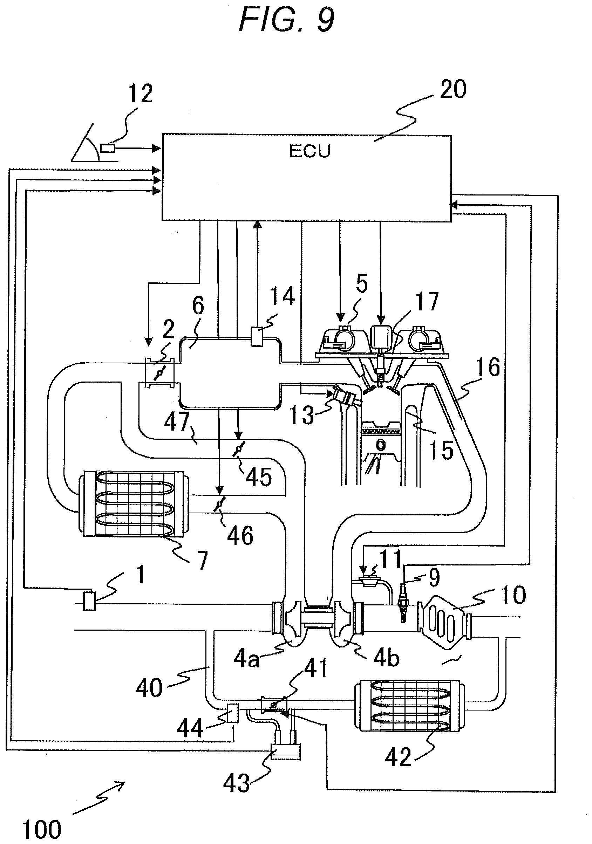

A structure and an operation of a control device for an engine according to example useful to understand the present invention will be described with reference to FIG. 9 to FIG. 13.

FIG. 9 is a system structure diagram illustrating a system in which the control device for an engine according to the example useful to understand the present invention is used for a direct-injection gasoline engine for automobiles including a low-pressure EGR flow passage and an intercooler bypass.

The engine 100 is the four-cylinder gasoline engine carrying out the spark ignition combustion. The intake pipe of the engine 100 includes at the appropriate positions, the air flow sensor 1 that measures the amount of intake air, the compressor 4a of the turbocharger that turbocharges the intake gas, the intercooler 7 that cools the intake gas, the electronic control throttle 2 that adjusts the intake pipe pressure, and the intake pressure sensor 14 that measures the pressure in the intake manifold 6. The engine 100 is further provided with the fuel injection device (hereinafter injector) 13 that injects the fuel into the cylinder 15 of each cylinder, and the ignition plug 17 that supplies the ignition energy for each cylinder. In addition, the cylinder head of the engine 100 is provided with the variable valve 5 that adjusts the gas flowing into the cylinder or emitted from the cylinder. By adjusting the variable valve 5, the amount of intake gas and the amount of internal EGR are adjusted in all the No. 1 to No. 4 cylinders. Although not shown, the fuel injection device 13 is connected through the fuel pipe to a high-pressure fuel pump that supplies the high-pressure fuel to the fuel injection device 13, and the fuel pipe is internally provided with a fuel pressure sensor that measures the fuel injection pressure.

In addition, the exhaust pipe 16 includes at the appropriate positions, the turbine 4b that applies the rotatory power to the compressor 4a of the turbocharger with the exhaust gas energy, the electronic control waste gate valve 11 that adjusts the flow rate of exhaust gas flowing in the turbine, the three-way catalyst 10 that cleans the exhaust gas, and the air-fuel ratio sensor 9 corresponding to one embodiment of an air-fuel ratio detector for detecting the air-fuel ratio of the exhaust gas on the upstream side of the three-way catalyst 10. Although not shown, a crank shaft is provided with a crank angular sensor that calculates the rotation angle.

In addition, the EGR pipe 40 that refluxes the exhaust gas from the downstream side of the catalyst 10 in the exhaust pipe to the upstream side of the compressor 4a in the intake pipe is provided. The EGR pipe 40 includes at the appropriate positions, the EGR cooler 42 that cools the EGR, the EGR valve 41 that controls the EGR flow rate, the differential pressure sensor 43 that detects the difference in pressure between the upstream side and the downstream side of the EGR valve, and the EGR temperature sensor 44 that detects the EGR temperature.

Moreover, an intercooler bypass flow passage 47 that connects the upstream part of the throttle 2 and the downstream part of the compressor 4a is provided, and an intercooler bypass valve A45 and an intercooler bypass valve B46 for adjusting the amount of gas flowing in the intercooler bypass flow passage 47 are provided at the illustrated positions.

Signals from the air flow sensor 1, the air-fuel ratio sensor 9, the intake pressure sensor 14, the differential pressure sensor 43, and the EGR temperature sensor 44 are input to the engine control unit (ECU) 20. In addition, the signals obtained from the accelerator opening sensor 12 are sent to the ECU 20. The accelerator opening sensor 12 detects the amount of pushing the accelerator pedal, i.e., the accelerator opening. The ECU 20 calculates the required torque on the basis of the output signals of the accelerator opening sensor 12. That is, the accelerator opening sensor 12 is used as the required torque detection sensor that detects the torque required for the engine. The ECU 20 calculates the engine speed on the basis of the output signal of the crank angular sensor. Based on the operation state of the engine obtained from the outputs of various sensors described above, the ECU 20 optimally calculates the main operation amount of the engine, such as the air flow rate, the fuel injection amount, the ignition time, and the fuel pressure.

The fuel injection amount calculated by the ECU 20 is converted into a valve opening pulse signal and the signal is sent to the injector 13. The ignition signal is sent to the ignition plug 17 so that the ignition occurs at the ignition time calculated by the ECU 20. In addition, the throttle opening calculated by the ECU 20 is sent to the electronic control throttle 2 as the throttle driving signal. The operation amount of the variable valve calculated by the ECU 20 is sent to the variable valve 5 as the variable valve driving signal. The waste gate valve opening calculated by the ECU 20 is sent to the waste gate valve 11 as the waste gate valve driving signal. The EGR valve opening calculated by the ECU 20 is sent to the EGR valve 41 as the EGR valve driving signal. The intercooler bypass valve opening calculated by the ECU 20 is sent to the intercooler bypass valve A45 and an intercooler bypass valve A46 as an intercooler bypass valve driving signal.

The fuel is injected to the air flowing through the intake valve from the intake pipe into the cylinder 15 and thus the mixed gas is formed. The mixed gas explodes by the spark generated from the ignition plug 17 at the predetermined ignition time, and with the combustion pressure, the piston is pressed down to produce the driving power for the engine. In addition, the exhaust gas after the explosion is sent to the three-way catalyst 10 through the exhaust pipe 16, and the exhaust component is cleaned in the three-way catalyst 10 and then discharged to the outside.

The EGR control region of the operation control device for the engine according to the example useful to understand the present invention is similar to that in FIG. 2.

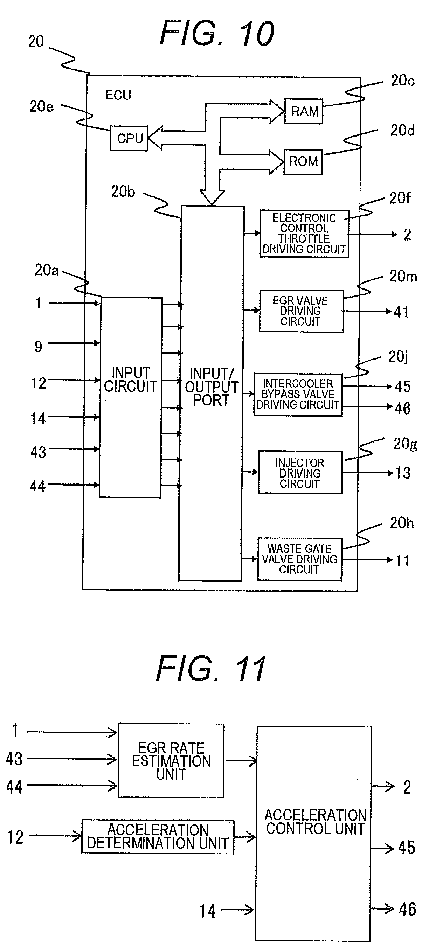

FIG. 10 is a system block diagram illustrating the structure of the control device for the engine according to the example useful to understand the present invention. The output signals from the air flow sensor 1, the air-fuel ratio sensor 9, the accelerator opening sensor 12, the intake pressure sensor 14, the differential pressure sensor 43, and the EGR temperature sensor 44 are input to the input circuit 20a of the ECU 20. However, the input signals are not limited thereto. The input signals of the sensors are sent to an input port of the input/output port 20b. The values sent to the input port 20b are saved in the RAM 20c and calculated by the CPU 20e. A control program describing the calculation process content is written in the ROM 20d in advance.

The values representing the operation amount of each actuator calculated in accordance with the control program are saved in the RAM 20c, sent to an output port of the input/output port 20b, and then sent to each actuator through each driving circuit. In the case of this embodiment, the driving circuits include the electronic throttle driving circuit 20f, the injector driving circuit 20g, the waste gate valve driving circuit 20h, and an intercooler bypass valve driving circuit 20j. These circuits control the electronic control throttle 2, the injector 13, the waste gate valve 11, and the intercooler bypass valve A45 and the intercooler bypass valve B46, respectively. In this embodiment, the device includes the driving circuits in the ECU 20 but the present invention is not limited thereto, and any of the driving circuits may be included in the ECU 20.

The ECU 20 estimates the EGR rate on the basis of the input signals and controls the throttle valve 2 and the intercooler bypass valve A45 and the intercooler bypass valve B46 when the acceleration is requested in the state of a large amount of EGR.

FIG. 11 is a diagram illustrating the outline of the acceleration control logic carried out in the ECU 20 of the control device for the engine according to the example useful to understand the present invention. The EGR rate estimation unit, the acceleration determination unit, and the acceleration control unit are provided. A signal of the air flow sensor 1, the differential pressure sensor signal 43, and the EGR temperature sensor signal 44 are input to the EGR rate estimation unit, and the EGR rate is calculated. The accelerator opening signal 12 is input to the acceleration determination unit in which whether the acceleration is currently carried out or not is determined. The EGR rate calculated by the EGR rate estimation unit, the acceleration determination flag output from the acceleration determination unit, and the intake pressure signal 14 are input to the acceleration control unit and if the control for the acceleration is necessary, the control for the acceleration is executed for the throttle and the intercooler bypass valve.

The control method for the throttle with respect to the accelerator opening of the acceleration control unit according to the example useful to understand the present invention is similar to that in FIG. 6(a).

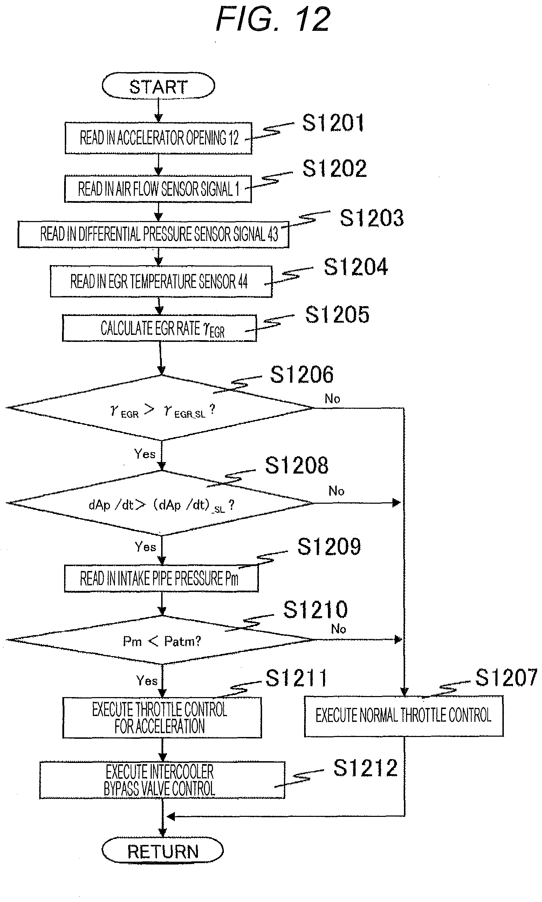

FIG. 12 is a flowchart illustrating the acceleration control content in the control device for the engine according to the example useful to understand the present invention. The control content illustrated in FIG. 12 is repeatedly executed in every predetermined period by the ECU 20.

The ECU 20 reads in the accelerator opening signal 12 in Step S1201, the signal of the air flow sensor 1 in Step S1202, the differential pressure sensor signal 43 in Step S1203, and then the EGR temperature sensor signal 44 in Step S1204. Next, in Step S1205, based on the signal of the air flow sensor 1, the signal of the differential pressure sensor 43, and the signal of the EGR temperature sensor 44 which have been read in, the EGR rate $\gamma_{EGR}$ in the intake gas is calculated according to the aforementioned formulae (1) and (2).

Next, in Step S1206, the magnitude relation between the calculated EGR rate $\gamma_{EGR}$ and the EGR rate threshold value $\gamma_{EGR\_SL}$ that has been determined in advance is compared and whether the transitional EGR decrease (spike) can occur or not is determined.

If $\gamma_{EGR} > \gamma_{EGR\_SL}$ is satisfied, it is determined that the transitional EGR decrease (spike) can occur and the process advances to Step S1208.

If $\gamma_{EGR} < \gamma_{EGR\_SL}$ is satisfied, it is determined that the transitional EGR decrease (spike) cannot occur and the process advances to Step S1207 and the normal throttle control is executed, and a series of controls is terminated.

In Step S1208, the degree of the acceleration request from the driver (here, the time change quantity Ap/dt of the accelerator opening Ap is used) is calculated and by comparing the magnitude relation with a predetermined threshold value $(Ap/dt)_{SL}$, whether the transitional EGR decrease (spike) can occur or not is determined.

$$\frac{A_P}{dt} > \left(\frac{A_P}{dt}\right)_{SL}$$

If this formula is satisfied, it is determined that the transitional EGR decrease (spike) can occur and the process advances to Step S1209.

$$\frac{A_P}{dt} < \left(\frac{A_P}{dt}\right)_{SL}$$

If this formula is satisfied, it is determined that the transitional EGR decrease (spike) cannot occur and the process advances to Step S1207 and the normal throttle control is executed, and a series of controls is terminated.

In Step S1209, the signal of the intake pipe pressure sensor 14 is read in. Next, the process advances to Step S1210 in which whether the transitional EGR decrease (spike) can occur or not is determined by comparing the magnitude relation between the read intake pressure $P_m$ and the atmospheric pressure $P_{atm}$.

If $P_m < P_{atm}$ is satisfied, it is determined that the transitional EGR decrease (spike) can occur and the process advances to Step S1211.

If $P_m > P_{atm}$ is satisfied, it is determined that the transitional EGR decrease (spike) cannot occur and the process advances to Step S1207 and the normal throttle control is executed and then a series of controls is terminated.

If the process has advanced to Step S1211, it is determined that the current acceleration condition is the condition where the transitional EGR decrease (spike) occurs. Therefore, the throttle control for the acceleration is executed and then the intercooler bypass valve control is executed in Step S1212. Specifically, the intercooler bypass valve A45 is opened and the intercooler bypass valve B46 is closed to reduce the distance from the EGR junction to the cylinder, so that the mixed gas with the EGR rate decreased in the junction can reach the cylinder as quickly as possible. After that, a series of controls is terminated.

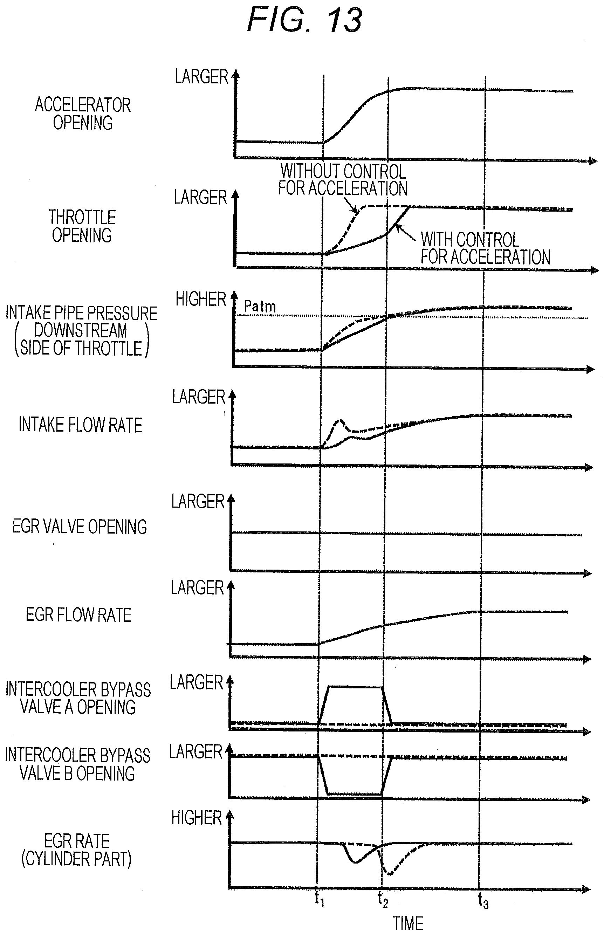

FIG. 13 is a time chart of the acceleration control by the control device for the engine according to the example useful to understand the present invention. The drawing shows in the order from above, the change over time of the accelerator opening, the throttle opening, the intake pipe pressure in the downstream part of the throttle, the flow rate of fresh air (air), the EGR valve opening, the EGR flow rate, the intercooler bypass valve A opening, the intercooler bypass valve B opening, and the EGR rate of the cylinder part. For the reference, the dotted lines indicate the results of not executing the control for the acceleration. In this example, it is assumed that the driving is conducted at the EGR rate that is more than or equal to a predetermined value from the beginning. At the time $t_1$, the driver pushes in the accelerator to start the acceleration. In this example, since the driver highly requires for the acceleration, the control for the acceleration is executed. As the accelerator opening is increased, the throttle opening is increased. Here, since the increase in throttle opening is gentler than that without the control for the acceleration, the sharp increase in amount of intake gas flowing in the throttle is suppressed and the sharp increase in flow rate of fresh air (air) is suppressed. At the same time, the intercooler bypass valve A is opened and the intercooler bypass valve B is closed, so that the flow passage from the junction where the fresh air and the EGR are mixed to the cylinder is shortened. At the time $t_2$, the pressure $P_m$ of the intake pipe reaches the atmospheric pressure $P_{atm}$. The control for the acceleration then shifts to the normal control and the throttle opening is increased to the level without the control for the acceleration. Here, the intercooler bypass valve A is closed and the intercooler bypass valve B is opened. At the time $t_3$, the acceleration ends and the state shifts to the normal driving state. By the aforementioned control of the throttle valve, the sudden increase in flow rate of fresh air can be suppressed and the decrease in EGR rate can be suppressed even in the acceleration state from the time $t_1$ to the time $t_3$. In addition, the intercooler bypass valve A is opened right after the acceleration and the mixed gas with the EGR rate decreased is introduced to the cylinder early. This causes the mixed gas with the EGR rate decreased to be introduced into the cylinder in the initial acceleration stage where the temperature in the combustion chamber is relatively low; therefore, the knocking due to the lack of EGR can be suppressed.

In the engine including the low-pressure EGR flow passage, the intercooler bypass flow passage, and the turbocharger, by selecting the control method for the throttle valve and the intercooler bypass valves on the basis of the current EGR rate, the intake pipe pressure, and the driver's requested acceleration degree in view of the acceleration control method described in this example, the decrease in EGR rate at the acceleration can be suppressed and at the same time, the mixed gas of the fresh air and the EGR can be introduced to the cylinder early. Thus, the deterioration in exhaust gas and the deterioration in driving property due to the knocking can be suppressed.

As described above, the engine control device according to the present invention is the control device for the internal combustion engine including the turbocharger, the low-pressure EGR flow passage that connects between the exhaust pipe on the downstream side of the turbine of the turbocharger and the intake pipe on the upstream side of the compressor of the turbocharger, the throttle valve that controls the amount of gas flowing in the cylinder, and the EGR valve that controls the flow rate of the EGR in the EGR flow passage, wherein "the throttle control for the acceleration" is executed. The throttle control for the acceleration is to reduce the amount of controlling the opening of the throttle valve with respect to the accelerator opening when the acceleration is requested while the driving is conducted at the EGR rate with predetermined value or more, as compared to when the acceleration is requested while the driving is conducted at the EGR rate with predetermined value or less.

With this structure, the speed of the intake gas flowing from the upstream side to downstream side of the throttle valve at the acceleration can be suppressed and the increase in amount of fresh air can be reduced. This can maintain the EGR rate properly.

In another aspect of the engine control device according to the present invention, an acceleration request degree determination unit that determines the degree of acceleration requested from a driver is further provided. If the acceleration is requested while the driving is conducted at the EGR rate with the predetermined value or more and the determination unit has determined that the acceleration request degree is a predetermined value or more, the throttle control for the acceleration is executed.

With this structure, the throttle control for the acceleration is executed only when the acceleration is sharp; therefore, the deterioration in accelerating performance in the other driving conditions can be prevented.

In addition, in another aspect of the engine control device according to the present invention, an intake pipe pressure detection unit that detects the pressure in the intake pipe on the downstream side of the compressor of the turbocharger is further provided. When the acceleration is requested, the throttle control for the acceleration is executed in a period where the intake pipe pressure is lower than the atmospheric pressure.

With this structure, the throttle control for the acceleration is executed only when the temporary decrease of EGR rate can occur (≈ while the intake pipe pressure is lower than the atmospheric pressure); thus, the deterioration in accelerating performance can be minimized.

Another aspect of the engine control device according to the present invention is the control device for an internal combustion engine according to any of Claims 1 to 4, wherein, if the throttle control for the acceleration is executed, the opening of the EGR valve is temporarily increased between the time when the throttle starts the operation and the time when the throttle ends the operation.

With the above structure, the increase in fresh air is suppressed and the EGR is increased at the acceleration. This can avoid the temporary decrease in EGR rate more surely. Reference Signs List

| | |
|---|---|
| 1 | air flow sensor |
| 2 | throttle valve |
| 4 | turbocharger |
| 4a | compressor |
| 4b | turbine |
| 5 | variable valve |
| 6 | intake manifold |
| 7 | intercooler |
| 9 | air-fuel ratio sensor |
| 10 | three-way catalyst |
| 11 | waste gate valve |
| 12 | accelerator opening sensor |
| 13 | injector for direct injection |
| 14 | intake pressure sensor |
| 15 | cylinder |
| 16 | exhaust pipe |
| 17 | ignition plug |
| 20 | ECU |
| 20a | input circuit |
| 20b | input/output port |
| 20c | RAM |
| 20d | ROM |
| 20e | CPU |
| 20f | throttle valve driving circuit |
| 20g | injector driving circuit |
| 20h | waste gate valve driving circuit |
| 20m | EGR valve driving circuit |
| 20j | intercooler bypass valve driving circuit |
| 40 | EGR pipe |
| 41 | EGR valve |
| 42 | EGR cooler |
| 43 | differential pressure sensor |
| 44 | EGR temperature sensor |
| 45 | intercooler bypass valve A |
| 46 | intercooler bypass valve B |
| 47 | intercooler bypass flow passage |

100 engine

## Claims

1. A control device for an internal combustion engine, comprising:

   - a turbocharger (4);
   - a low-pressure EGR flow passage that connects between an exhaust pipe (16) on a downstream side of a turbine (4b) of the turbocharger (4) and an intake pipe on an upstream side of a compressor (4a) of the turbocharger (4);
   - an intake amount adjusting valve that controls an amount of gas flowing in a cylinder (15); and
   - an EGR valve (41) that controls a flow rate of an exhaust gas in the low-pressure EGR flow passage, wherein

   when an acceleration request is made, an intake amount control for acceleration is executed in which an amount of controlling an opening of the intake amount adjusting valve relative to an accelerator operation is reduced as an EGR rate increases, wherein, in a case of executing the intake amount control for acceleration, an opening of the EGR valve (41) is increased temporarily between a time when the intake amount adjusting valve starts an operation and a time when the intake amount adjusting valve ends the operation.

2. The control device for an internal combustion engine according to claim 1, wherein the intake amount control for acceleration is to reduce the amount of controlling the opening of the intake amount adjusting valve relative to the accelerator operation when the acceleration request is made in a state that driving is conducted at the EGR rate with a predetermined value or more as compared to when the acceleration request is made in a state that driving is conducted at the EGR rate with the predetermined value or less.

3. The control device for an internal combustion engine according to claim 2, wherein the intake amount control for acceleration is executed when the acceleration request is more than or equal to a predetermined value.

4. The control device for an internal combustion engine according to claim 3, wherein the acceleration request from a driver is determined based on a change amount of a driver's accelerator operation amount or a change rate of the accelerator operation amount.

5. The control device for an internal combustion engine according to claim 1, wherein the intake amount control for acceleration is executed in a period where a pressure in the intake pipe on a downstream side of the compressor (4a) of the turbocharger (4) is lower than atmospheric pressure when the acceleration request is made.

6. The control device for an internal combustion engine according to claim 1, wherein in a case of executing the intake amount control for acceleration, the EGR valve (41) is controlled so that an opening of the EGR valve (41) has a maximum value between a time when the intake amount adjusting valve starts an operation and a time when the intake amount adjusting valve ends the operation.

7. The control device for an internal combustion engine according to claim 1, wherein

   the internal combustion engine (100) includes an intercooler (7) that cools intake gas in an intake flow passage on an upstream side of the intake amount adjusting valve, an intercooler bypass flow passage (47) that bypasses the intake gas on the downstream side of the turbine (46) to the upstream side of the intake amount adjusting valve without letting the intake gas go through the intercooler (7), and an intake bypass valve in the intercooler bypass flow passage that controls an amount of intake gas flowing in the intercooler bypass flow passage, and the intake bypass valve is opened when the intake amount control for acceleration is executed.

8. The control device for an internal combustion engine according to claim 1, wherein in a case of executing the intake amount control for acceleration, an ignition time is lagged by a predetermined period after the acceleration request starts, as compared to a case in which the intake amount control for acceleration is not executed.

9. The control device for an internal combustion engine according to claim 1, wherein the control device for an internal combustion engine (100) is mounted on an automobile further including a vehicle driving motor as a motive power source for vehicle driving, and an output of the vehicle driving motor is increased for a predetermined period after the acceleration request starts in a case of executing the intake amount control for acceleration.

10. The control device for an internal combustion engine according to claim 2, wherein the intake amount adjusting valve is controlled to delay an increase in opening of the intake amount adjusting valve relative to an increase in accelerator opening when an acceleration request is made in a state that driving is conducted at an EGR rate with a predetermined value or more.

11. The control device for an internal combustion engine according to claim 1, wherein
the intake amount adjusting valve is any of a throttle valve, which is provided upstream of the cylinder (15), and whose opening changes depending on an accelerator opening, an intake valve provided for each cylinder on a downstream side of the throttle valve, and a waste gate valve that adjusts a flow rate of the exhaust gas flowing in the turbine.

**Patentansprüche**

1. Steuervorrichtung für eine Brennkraftmaschine, die Folgendes umfasst:

 - einen Turbolader (4);
 - einen Niederdruck-AGR-Durchflusskanal, der zwischen einer Auslassleitung (16) auf einer stromabwärts liegenden Seite einer Turbine (4b) des Turboladers (4) und einer Einlassleitung auf einer stromaufwärts liegenden Seite eines Kompressors (4a) des Turboladers (4) eine Verbindung herstellt;
 - ein Einlassmengeneinstellventil, das eine Menge des Gases, das in einen Zylinder (15) strömt, steuert; und
 - ein AGR-Ventil (41), das eine Durchflussmenge eines Abgases im Niederdruck-AGR-Durchflusskanal steuert, wobei

 dann, wenn eine Beschleunigungsanforderung gestellt wird, eine Einlassmengensteuerung zur Beschleunigung ausgeführt wird, wobei ein Betrag des Steuerns einer Öffnung des Einlassmengeneinstellventils in Bezug auf eine Fahrpedalbetätigung verringert ist, wenn eine AGR-Rate zunimmt, und eine Öffnung des AGR-Ventils (41) zwischen einer Zeit, zu der das Einlassmengeneinstellventil eine Betätigung beginnt, und einer Zeit, zu der das Einlassmengeneinstellventil die Betätigung beendet, vorübergehend erhöht ist, falls die Einlassmengensteuerung zur Beschleunigung ausgeführt wird.

2. Steuervorrichtung für eine Brennkraftmaschine nach Anspruch 1, wobei
die Einlassmengensteuerung zur Beschleunigung ausgelegt ist, dann, wenn die Beschleunigungsanforderung in einem Zustand gestellt wird, in dem ein Fahren bei der AGR-Rate mit einem vorgegebenen Wert oder mehr durchgeführt wird, im Vergleich dazu, wenn die Beschleunigungsanforderung in einem Zustand gestellt wird, in dem ein Fahren bei der AGR-Rate mit dem vorgegebenen Wert oder weniger durchgeführt wird, den Betrag des Steuerns der Öffnung des Einlassmengeneinstellventils in Bezug auf die Fahrpedalbetätigung zu verringern.

3. Steuervorrichtung für eine Brennkraftmaschine nach Anspruch 2, wobei
die Einlassmengensteuerung zur Beschleunigung ausgeführt wird, wenn die Beschleunigungsanforderung größer oder gleich einem vorgegebenen Wert ist.

4. Steuervorrichtung für eine Brennkraftmaschine nach Anspruch 3, wobei
die Beschleunigungsanforderung von einem Fahrer auf der Grundlage eines Änderungsbetrags des Fahrpedalbetätigungsbetrags eines Fahrers oder einer Änderungsrate des Fahrpedalbetätigungsbetrags bestimmt wird.

5. Steuervorrichtung für eine Brennkraftmaschine nach Anspruch 1, wobei
die Einlassmengensteuerung zur Beschleunigung in einem Zeitraum ausgeführt wird, in dem ein Druck in der Einlassleitung auf einer stromabwärts liegenden Seite des Kompressors (4a) des Turboladers (4) niedriger als der atmosphärische Druck ist, wenn die Beschleunigungsanforderung gestellt wird.

6. Steuervorrichtung für eine Brennkraftmaschine nach Anspruch 1, wobei
das AGR-Ventil (41) derart gesteuert wird, dass eine Öffnung des AGR-Ventils (41) einen Höchstwert zwischen einer Zeit, zu der das Einlassmengeneinstellventil eine Betätigung beginnt, und einer Zeit, zu der das Einlassmengeneinstellventil die Betätigung beendet, aufweist, falls die Einlassmengensteuerung zur Beschleunigung ausgeführt wird.

7. Steuervorrichtung für eine Brennkraftmaschine nach Anspruch 1, wobei

 die Brennkraftmaschine (100) einen Ladeluftkühler (7), der ein Einlassgas in einem Einlassdurchflusskanal auf einer stromaufwärts liegenden Seite des Einlassmengeneinstellventils kühlt, einen Ladeluftkühlerumgehungs-Durchflusskanal (47), der das Einlassgas auf der stromabwärts liegenden Seite der Turbine (46) zur stromaufwärts liegenden Seite des Einlassmengeneinstellventils umleitet, ohne das Einlassgas den Ladeluftkühler (7) durchlaufen zu lassen, und ein Einlassumgehungsventil im Ladeluftkühlerumgehungs-Durchflusskanal, das eine Menge eines Einlassgases, das in den Ladeluftkühlerumgehungs-Durchflusskanal strömt, steuert, enthält und
 das Einlassumgehungsventil geöffnet ist, wenn die Einlassmengensteuerung zur Beschleunigung ausgeführt wird.

8. Steuervorrichtung für eine Brennkraftmaschine nach Anspruch 1, wobei eine Zündzeit um einen vorgegebenen Zeitraum, nachdem die Beschleunigungsanforderung begonnen hat, im Vergleich zu einem Fall, in dem die Einlassmengensteuerung zur Beschleunigung nicht ausgeführt wird, verzögert ist, falls die Einlassmengensteuerung zur Beschleunigung ausgeführt wird.

9. Steuervorrichtung für eine Brennkraftmaschine nach Anspruch 1, wobei die Steuervorrichtung für eine Brennkraftmaschine (100) an einem Personenkraftwagen montiert ist, der ferner einen Fahrzeugfahrmotor als eine Antriebskraftquelle zum Fahrzeugfahren enthält, und eine Leistung des Fahrzeugfahrmotors für einen vorgegebenen Zeitraum, nachdem die Beschleunigungsanforderung begonnen hat, erhöht ist, falls die Einlassmengensteuerung zur Beschleunigung ausgeführt wird.

10. Steuervorrichtung für eine Brennkraftmaschine nach Anspruch 2, wobei das Einlassmengeneinstellventil gesteuert wird, eine Zunahme der Öffnung des Einlassmengeneinstellventils in Bezug auf eine Zunahme des Fahrpedalniederdrückens zu verzögern, wenn eine Beschleunigungsanforderung in einem Zustand gestellt wird, in dem ein Fahren bei einer AGR-Rate mit einem vorgegebenen Wert oder mehr durchgeführt wird.

11. Steuervorrichtung für eine Brennkraftmaschine nach Anspruch 1, wobei das Einlassmengeneinstellventil eines bzw. eine einer Drosselklappe, die stromaufwärts des Zylinders (15) vorgesehen ist und deren Öffnung sich abhängig von einem Fahrpedalniederdrücken ändert, eines Einlassventils, das für jeden Zylinder auf einer stromabwärts liegenden Seite der Drosselklappe vorgesehen ist, und eines Ladedruckregulierungsventilventils, das eine Durchflussmenge des Abgases, das in die Turbine strömt, einstellt, ist.

## Revendications

1. Dispositif de commande pour un moteur à combustion interne, comprenant :

   - un turbocompresseur (4) ;
   - un passage d'écoulement de recirculation des gaz d'échappement (EGR) à basse pression qui assure une connexion entre un tuyau d'échappement (16) sur un côté aval d'une turbine (4b) du turbocompresseur (4) et un tuyau d'admission sur un côté amont d'un compresseur (4a) du turbocompresseur (4) ;
   - une soupape d'ajustement de quantité d'admission qui commande une quantité de gaz s'écoulant dans un cylindre (15) ; et
   - une soupape EGR (41) qui commande un débit d'un gaz d'échappement dans le passage d'écoulement EGR à basse pression, dans lequel

   quand une requête d'accélération est faite, une commande de quantité d'admission pour accélération est exécutée dans laquelle une commande quantitative d'une ouverture de la soupape d'ajustement de quantité d'admission relativement à un actionnement d'accélérateur est réduite lorsqu'un taux EGR augmente, dans lequel, dans un cas où la commande de quantité d'admission pour accélération est exécutée, une ouverture de la soupape EGR (41) est augmentée temporairement entre un temps où la soupape d'ajustement de quantité d'admission commence un actionnement et un temps où la soupape d'ajustement de quantité d'admission arête l'actionnement.

2. Dispositif de commande pour un moteur à combustion interne selon la revendication 1, dans lequel la commande de quantité d'admission pour accélération vise à réduire la commande quantitative de l'ouverture de la soupape d'ajustement de quantité d'admission relativement à l'actionnement d'accélérateur quand la requête d'accélération est faite dans un état dans lequel une conduite est effectuée au taux EGR avec une valeur prédéterminée ou plus, par comparaison au temps où la requête d'accélération est faite dans un état dans lequel une conduite est effectuée au taux EGR avec la valeur prédéterminée ou moins.

3. Dispositif de commande pour un moteur à combustion interne selon la revendication 2, dans lequel la commande de quantité d'admission pour accélération est exécutée quand la requête d'accélération est supérieure ou égale à une valeur prédéterminée.

4. Dispositif de commande pour un moteur à combustion interne selon la revendication 3, dans lequel la requête d'accélération provenant d'un conducteur est déterminée sur la base d'un changement quantitatif d'une amplitude d'actionnement d'accélérateur du conducteur ou d'un taux de changement de l'amplitude d'actionnement d'accélérateur.

5. Dispositif de commande pour un moteur à combustion interne selon la revendication 1, dans lequel la commande de quantité d'admission pour accélération est exécutée dans une période dans laquelle une pression dans le tuyau d'admission sur un côté aval du compresseur (4a) du turbocompresseur (4) est inférieure à une pression atmosphérique quand la requête d'accélération est faite.

6. Dispositif de commande pour un moteur à combustion interne selon la revendication 1, dans lequel dans un cas où la commande de quantité d'admission pour accélération est exécutée, la soupape EGR (41) est commandée de telle sorte qu'une ouverture de la soupape EGR (41) a une valeur maximum entre un temps où la soupape d'ajustement de quantité d'admission commence un actionnement et un temps où la soupape de justement de quantité d'admission termine un actionnement.

7. Dispositif de commande pour un moteur à combustion interne selon la revendication 1, dans lequel

le moteur à combustion interne (100) inclut un intercooler (7) qui refroidit un gaz d'admission dans un passage d'écoulement d'admission sur un côté amont de la soupape d'ajustement de quantité d'admission, un passage d'écoulement de bypass d'intercooler (47) qui bypasse le gaz d'admission sur le côté aval de la turbine (46) jusqu'au côté amont de la soupape d'ajustement de quantité d'admission sans laisser le gaz d'admission passer à travers l'intercooler (7), et une soupape de bypass d'admission dans le passage d'écoulement de bypass d'intercooler qui commande une quantité de gaz d'admission s'écoulant dans le passage d'écoulement de bypass d'intercooler, et
la soupape de bypass d'admission est ouverte quand la commande de quantité d'admission pour accélération est exécutée.

8. Dispositif de commande pour un moteur à combustion interne selon la revendication 1, dans lequel dans un cas où la commande de quantité d'admission pour accélération est exécutée, un temps d'allumage est différé à raison d'une période prédéterminée après le démarrage de la requête d'accélération, par comparaison à un cas dans lequel la commande de quantité d'admission pour accélération n'est pas exécutée.

9. Dispositif de commande pour un moteur à combustion interne selon la revendication 1, dans lequel le dispositif de commande pour un moteur à combustion interne (100) est monté sur une automobile incluant en outre une motrice d'entraînement de véhicule comme source de puissance motrice pour un entraînement du véhicule, et une sortie de la motrice d'entraînement de véhicule est augmentée pendant une période prédéterminée après le démarrage de la requête d'accélération dans un cas où la commande de quantité d'admission pour accélération est exécutée.

10. Dispositif de commande pour un moteur à combustion interne selon la revendication 2, dans lequel la soupape d'ajustement de quantité d'admission est commandée pour retarder une augmentation dans une ouverture de la soupape d'ajustement de quantité d'admission relativement à une augmentation dans une ouverture d'accélérateur quand une requête d'accélération est faite dans un état dans lequel une conduite est effectuée à un taux EGR avec une valeur prédéterminée ou plus.

11. Dispositif de commande pour un moteur à combustion interne selon la revendication 1, dans lequel la soupape d'ajustement de quantité d'admission est une soupape quelconque parmi une soupape papillon, qui est prévue en amont du cylindre (15) et dont l'ouverture change en dépendance d'une ouverture d'accélérateur, une soupape d'admission prévue pour chaque cylindre sur un côté aval de la soupape papillon, et une soupape wastegate qui ajuste un débit du gaz d'échappement s'écoulant dans la turbine.

# FIG. 1

# FIG. 2

# FIG. 3

ACCELERATOR OPENING

THROTTLE OPENING

ATMOSPHERIC PRESSURE

FRESH AIR (AIR) FLOW RATE

EGR VALVE OPENING

EGR FLOW RATE

EGR RATE

LARGER

LARGER

HIGHER

LARGER

LARGER

LARGER

HIGHER

UPSTREAM SIDE OF THROTTLE

INTAKE PRESSURE

DOWNSTREAM SIDE OF THROTTLE

JUNCTION

CYLINDER PART

$t_1$   $t_2$   $t_3$

TIME

## FIG. 4

20

20c

ECU

20e

20d

CPU — RAM

ROM

20b

20f

THROTTLE
VALVE DRIVING
CIRCUIT → 2

20a

20m

1 →

EGR VALVE
DRIVING
CIRCUIT → 41

9 →

12 → INPUT
CIRCUIT

INPUT/
OUTPUT
PORT

20g

14 →

INJECTOR
DRIVING
CIRCUIT → 13

43 →

44 →

20h

WASTE GATE
VALVE DRIVING
CIRCUIT → 11

## FIG. 5

1 →

EGR RATE
ESTIMATION
UNIT

43 →

44 →

ACCELERATION
CONTROL UNIT → 2

12 → ACCELERATION
DETERMINATION UNIT

→ 41

14 →

19

# FIG. 6

(a)

(b)

# FIG. 7

START

READ IN ACCELERATOR OPENING 12 — S701

READ IN AIR FLOW SENSOR SIGNAL 1 — S702

READ IN DIFFERENTIAL PRESSURE SENSOR SIGNAL 43 — S703

READ IN EGR TEMPERATURE SENSOR 44 — S704

CALCULATE EGR RATE $\gamma_{EGR}$ — S705

S706
$\gamma_{EGR} > \gamma_{EGR\_SL}$ ? — No

Yes

S709
$dAp/dt > (dAp/dt)_{SL}$ ? — No

Yes

READ IN INTAKE PIPE PRESSURE SENSOR SIGNAL Pm — S710

S711
Pm < Patm? — No

Yes

EXECUTE THROTTLE CONTROL FOR ACCELERATION — S712

EXECUTE NORMAL THROTTLE CONTROL — S707

EXECUTE EGR VALVE CONTROL FOR ACCELERATION — S713

EXECUTE NORMAL EGR VALVE CONTROL — S708

RETURN

21

# FIG. 8

ACCELERATOR OPENING

LARGER

WITHOUT CONTROL FOR ACCELERATION

THROTTLE OPENING

LARGER

WITH CONTROL FOR ACCELERATION

INTAKE PIPE PRESSURE (DOWNSTREAM SIDE OF THROTTLE)

HIGHER

Patm

FRESH AIR (AIR) FLOW RATE

LARGER

EGR VALVE OPENING

LARGER

EGR FLOW RATE

LARGER

EGR RATE (CYLINDER PART)

HIGHER

$t_1$    $t_2$    $t_3$

TIME

22

FIG. 9

## FIG. 10

## FIG. 11

# FIG. 12

```
START
  │
  ▼
READ IN ACCELERATOR OPENING 12        S1201
  │
  ▼
READ IN AIR FLOW SENSOR SIGNAL 1      S1202
  │
  ▼
READ IN DIFFERENTIAL PRESSURE SENSOR SIGNAL 43    S1203
  │
  ▼
READ IN EGR TEMPERATURE SENSOR 44     S1204
  │
  ▼
CALCULATE EGR RATE γEGR               S1205
  │
  ▼
```

S1206

$\gamma_{EGR} > \gamma_{EGR\_SL}$ ?  —— No ─────────────┐
  │ Yes                                                  │
  ▼                                                      │
S1208                                                    │
$dAp/dt > (dAp/dt)_{SL}$ ?  —— No ──────────────┐        │
  │ Yes                                          │       │
  ▼                                              │       │
READ IN INTAKE PIPE PRESSURE Pm    S1209         │       │
  │                                              │       │
  ▼                                              │       │
S1210                                            │       │
$Pm < Patm$ ?  —— No ────────────────────┐       │       │
  │ Yes                                  │       │       │
  ▼           S1211                      │       │       │  S1207
EXECUTE THROTTLE CONTROL                 │       │       │  EXECUTE NORMAL THROTTLE CONTROL
FOR ACCELERATION                         │       │       │
  │                                      │       │       │
  ▼                                      │       │       │
EXECUTE INTERCOOLER                      │       │       │
BYPASS VALVE CONTROL    S1212            │       │       │
  │                                      │       │       │
  ▼◄─────────────────────────────────────────────────────
RETURN

# FIG. 13

ACCELERATOR OPENING — LARGER

THROTTLE OPENING — LARGER — WITHOUT CONTROL FOR ACCELERATION — WITH CONTROL FOR ACCELERATION

INTAKE PIPE PRESSURE ( DOWNSTREAM SIDE OF THROTTLE ) — HIGHER — Patm

INTAKE FLOW RATE — LARGER

EGR VALVE OPENING — LARGER

EGR FLOW RATE — LARGER

INTERCOOLER BYPASS VALVE A OPENING — LARGER

INTERCOOLER BYPASS VALVE B OPENING — LARGER

EGR RATE (CYLINDER PART) — HIGHER

$t_1$   $t_2$   $t_3$

TIME

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012251509 A
- JP 2014152716 A
- JP 2011047357 A
- US 2003209234 A1
- EP 2532867 A2